# EUROPÄISCHE PATENTANMELDUNG

(11) **EP 1 035 345 A2**
(43) Veröffentlichungstag der Anmeldung: **13.09.2000**
(21) Anmeldenummer: 00104219.1
(22) Anmeldetag: 01.03.2000
(51) Int. Cl.: F16D 65/092

(54) **Dämpfungsblech für einen Scheibenbremsbelag**

(30) Priorität: 08.03.1999 DE 19909849
(71) Anmelder: CWW-GERKO Akustik GmbH & Co. KG, 67547 Worms (DE)
(72) Erfinder: Bildner, Karlheinz, Dipl.-Ing., 63589 Linsengericht-Grossenhausen (DE); Georgi, Jürgen, 68642 Bürstadt (DE)
(74) Vertreter: Schlagwein, Udo, Dipl.-Ing.

(57) **Zusammenfassung**

Ein Dämpfungsblech (4) zur Befestigung auf einer Trägerplatte (2) eines Bremsbackens (1) einer Scheibenbremse hat zusätzlich zu einer Dämpfungsschicht (5) zwischen der Trägerplatte (2) und dem Dämpfungsblech (4) auf seiner Außenseite eine selbstklebende Dämpfungsschicht (6).

## Beschreibung

Die Erfindung betrifft ein Dämpfungsblech zur Befestigung auf einer Trägerplatte eines Bremsbackens einer Scheibenbremse, welches auf der dem Bremsbacken zugewandten inneren Seite eine selbstklebende Dämpfungsschicht hat.

Ein Dämpfungsblech der vorstehenden Art ist beispielsweise in der DE 87 10 924.7 U1 beschrieben. In der Praxis hat sich gezeigt, dass bei Scheibenbremsen oftmals ein einziges Dämpfungsblech nicht ausreicht, um beim Bremsen entstehende Quietschgeräusche ausreichend zu dämpfen. Deshalb benutzt man oftmals statt eines einzigen Dämpfungsbleches ein aus mehreren, jeweils durch eine Dämpfungsschicht miteinander verbundenen Blechen bestehendes Sandwich, welches auch auf einer Seite eine Dämpfungsschicht hat und dadurch gegen die Rückseite der Trägerplatte geklebt werden kann. Gegen die andere Seite des Dämpfungsbleches liegt dann der Kolben des Bremszylinders oder eine Anlagefläche des Schwimmsattels einer Scheibenbremse an.

Durch solch ein Mehrfachsandwich kann man wirkungsvoll Quietschgeräusche beim Bremsen verhindern, jedoch ist es relativ teuer in der Herstellung und führt zu einer unerwünschten Erhöhung des Gewichtes und der Baugröße der Bremse. Da die Bremse zu den ungefederten Massen des Kraftfahrzeugs gehört, bedingt jede Erhöhung des Gewichtes eine Minderung des Fahrkomforts und eine Verschlechterung der Straßenlage. Auch geringe Erhöhungen der Baugröße von Scheibenbremsen sind bei heutigen Kraftfahrzeugen problematisch, weil aufgrund des fast immer negativen Lenkrollradius die Scheibenbremse tief in der Radschüssel angeordnet werden muss, so dass dort nur sehr geringer Platz zur Verfügung steht.

Der Erfindung liegt das Problem zugrunde, ein Dämpfungsblech der eingangs genannten Art so auszubilden, dass sich mit möglichst geringen Abmessungen und möglichst geringen Kosten eine ausreichend hohe Schalldämpfung verwirklichen lässt.

Dieses Problem wird neuerungsgemäß dadurch gelöst, dass das Dämpfungsblech zusätzlich auf seiner äußeren Seite mit einer selbstklebenden Dämpfungsschicht versehen ist.

Durch diese zusätzliche Dämpfungsschicht auf der Außenseite des Dämpfungsbleches wird das Dämpfungsblech nach seiner Montage nicht nur mit der Trägerplatte der Bremsbacke, sondern zusätzlich mit dem Bremskolben oder einer Anlagefläche des Schwimmsattels der Scheibenbremse verbunden. Dadurch wird aus dem nur durch ein zusätzliches Blech gebildeten Dämpfungsblech von der Funktion her ein Zweifachsandwich. Dieses ist durch die Anbindung an den Bremskolben oder Schwimmsattel überraschend wirksam, so dass Quietschgeräusche beim Bremsen nicht mehr auftreten.

Eine sehr hohe Dämpfwirkung erreicht man mit verhältnismäßig geringem Kostenaufwand, wenn gemäß einer Weiterbildung der Erfindung die beiden Dämpfungsschichten durch einen Polyacrylatkleber gebildet sind.

Wenn mit einer hohen Temperaturbeanspruchung des Dämpfungsbleches gerechnet werden muss, dann kann man gemäß einer anderen Weiterbildung der Erfindung auch vorsehen, dass die beiden Dämpfungsschichten durch einen Silikonkleber gebildet sind.

Der Verbrauch an Dämpfungsmasse ist besonders gering, wenn die Dämpfungsschicht auf der äußeren Seite im wesentlichen nur im Abstützbereich des Dämpfungsbleches gegen einen Bremskolben oder eine Abstützfläche eines Schwimmsattels vorgesehen ist. Die nur teilweise Beschichtung der Außenseite des Dämpfungsbleches mit einer Dämpfungsschicht hat zusätzlich den Vorteil, dass auf den freiliegenden Bereichen des Dämpfungsbleches kein Schmutz unerwünscht stark haftet.

Die Handhabung der Dämpfungsbleche vor ihrem Einsatz in einer Scheibenbremse ist besonders bequem, wenn auf den Dämpfungsschichten jeweils eine vor dem Einsatz des Dämpfungsbleches zu entfernende Abdeckfolie aufgebracht ist.

Die Abdeckfolie kann besonders leicht entfernt werden, indem man mit einem messerartigen Werkzeug entlang der Oberfläche des Dämpfungsbleches fährt und dabei unter die Abdeckfolie gelangt, ohne gleichzeitig schon mit der Dämpfungsschicht in Berührung zu kommen, wenn die Abdeckfolie auf der äußeren Seite des Dämpfungsbleches die Dämpfungsschicht nach beiden Seiten hin auf dem Dämpfungsblech überragt.

Als optimaler Werkstoff für das Dämpfungsblech konnte ein Stahlblech Typ XC10 BK, K70BK mit einer Festigkeit von 690 N/mm² nach DIN 1544/1624 oder aus einem Stahlblech XC 45 mit einer Festigkeit von 700 bis 780 N/mm² ermittelt werden.

Die Erfindung lässt verschiedene Ausführungsformen zu. Eine davon ist in der Zeichnung dargestellt und wird nachfolgend beschrieben. Die Zeichnung zeigt in
- Fig.1: eine perspektivische Darstellung einer Bremsbacke mit dem erfindungsgemäßen Dämpfungsblech,
- Fig.2: eine Draufsicht auf die Bremsbacke.

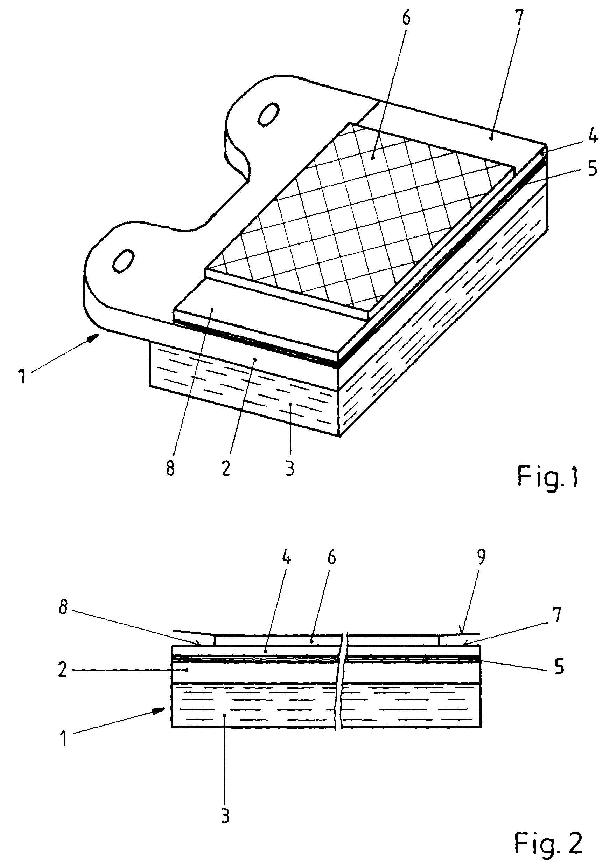

Die Figur 1 zeigt eine Bremsbacke 1, welche wie üblich aus einer Trägerplatte 2 und einem darauf aufgebrachten Reibbelag 3 besteht. Wichtig für die Erfindung ist ein Dämpfungsblech 4, welches durch eine selbstklebende Dämpfungsschicht 5 vollflächig mit der Trägerplatte 2 verbunden ist. Die Dämpfungsschicht 5 besteht wie bei den derzeitigen Dämpfungsplatten aus einem Polyacrylatkleber.

Auch auf der Außenseite des Dämpfungsbleches 4 ist eine Dämpfungsschicht 6 aufgebracht. Diese deckt jedoch nicht die gesamte Außenseite des Dämpfungsbleches 4 ab, vielmehr verbleiben Randbereiche 7, 8 frei von der äußeren Dämpfungsschicht 6.

Die Figur 2 lässt erkennen, dass auf der äußeren Dämpfungsschicht 6 eine Abdeckfolie 9 aufliegt, die zu den Randbereichen 7, 8 hin übersteht und deshalb leicht zum Zwecke des Entfernens untergriffen werden kann. Vor Einsatz des Dämpfungsbleches 4 ist diese Abdeckfolie 9 zu entfernen, so dass nach der Montage und dem Einbau in eine Scheibenbremse der Bremskolben oder eine Anlagefläche des Schwimmsattels über das Dämpfungsblech 4 einen festen Verbund mit der Bremsbacke 1 bildet.

Bei der Herstellung des Dämpfungsbleches 4 wird zunächst auf beiden Seiten jeweils eine Dämpfungsschicht 5, 6 aufgewalzt. Dann bringt man auf beiden Dämpfungsschichten 5, 6 die Abdeckfolie 9 auf. Danach kann man aus dem auf diese Weise gebildeten großflächigen Blech die einzelnen Dämpfungsbleche 4 ausstanzen und damit die Fertigung abschließen.

### Bezugszeichenliste

- 1: Bremsbacke
- 2: Trägerplatte
- 3: Reibbelag
- 4: Dämpfungsblech
- 5: Dämpfungsschicht
- 6: Dämpfungsschicht
- 7: Randbereich
- 8: Randbereich
- 9: Abdeckfolie

## Patentansprüche

1. Dämpfungsblech zur Befestigung auf einer Trägerplatte eines Bremsbackens einer Scheibenbremse, welches auf der dem Bremsbacken zugewandten inneren Seite eine selbstklebende Dämpfungsschicht hat, **dadurch gekennzeichnet,** dass das Dämpfungsblech (4) zusätzlich auf seiner äußeren Seite mit einer selbstklebenden Dämpfungsschicht (6) versehen ist.

2. Dämpfungsblech nach Anspruch 1, **dadurch gekennzeichnet,** dass die beiden Dämpfungsschichten (5, 6) durch einen Polyacrylatkleber gebildet sind.

3. Dämpfungsblech nach Anspruch 1, **dadurch gekennzeichnet,** dass die beiden Dämpfungsschichten (5, 6) durch einen Silikonkleber gebildet sind.

4. Dämpfungsblech nach zumindest einem der vorangehenden Ansprüche, **dadurch gekennzeichnet,** dass die Dämpfungsschicht (6) auf der äußeren Seite im wesentlichen nur im Abstützbereich des Dämpfungsbleches (4) gegen einen Bremskolben oder eine Abstützfläche eines Schwimmsattels vorgesehen ist.

5. Dämpfungsblech nach Anspruch 4, **dadurch gekennzeichnet**, dass auf den Dämpfungsschichten (5, 6) jeweils eine vor dem Einsatz des Dämpfungsbleches (4) zu entfernende Abdeckfolie (9) aufgebracht ist.

6. Dämpfungsblech nach Anspruch 5, **dadurch gekennzeichnet,** dass die Abdeckfolie (9) auf der äußeren Seite des Dämpfungsbleches (4) die Dämpfungsschicht (6) nach beiden Seiten hin auf dem Dämpfungsblech (4) überragt.

7. Dämpfungsblech nach zumindest einem der vorangehenden Ansprüche, **dadurch gekennzeichnet,** dass es aus Stahlblech Typ XC10 BK, K70BK mit einer Festigkeit von 690 N/mm² nach DIN 1544/1624 oder aus einem Stahlblech XC 45 mit einer Festigkeit von 700 bis 780 N/mm² gebildet ist.
